# EUROPEAN PATENT APPLICATION

(11) **EP 1 447 852 A2**
(43) Date of publication of application: **18.08.2004**
(21) Application number: 04002807.8
(22) Date of filing: 09.02.2004
(51) Int. Cl.: H01L 31/048, H01L 31/042, E04D 13/18

(54) **Attaching structural unit used for installing quadrangular solar-battery module onto slanted roof**

(30) Priority: 12.02.2003 JP 2003034044
(71) Applicant: Sharp Kabushiki Kaisha, Osaka-shi, Osaka 545-8522 (JP)
(72) Inventor: Tanaka, Masao, Tondabayashi-shi Osaka 630-8223 (JP)
(74) Representative: Müller - Hoffmann & Partner

(57) **Abstract**

An attaching structural unit used for installing a quadrangular solar-battery module onto a slanted roof: comprising
a module frame attached to the solar-battery module;
the module frame comprising a pair of first and second elongated frame elements opposed to each other and another pair of third and fourth elongated frame elements opposed to each other,
wherein each of the third and fourth frame elements respectively includes a water-leakage preventive edges protruding outward and extending longitudinally from each of the frame elements.

## Description

### BACKGROUND OF THE INVENTION

### Field of the Invention

The present invention relates to an attaching structural unit used for installing a quadrangular solar-battery module onto a slanted roof, and a solar-battery structural unit. It also relates to a attaching or removing method for a solar-battery structural unit.

### Description of the Related Art

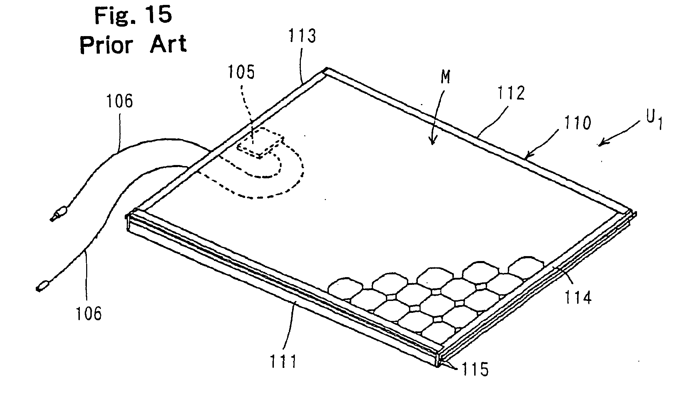

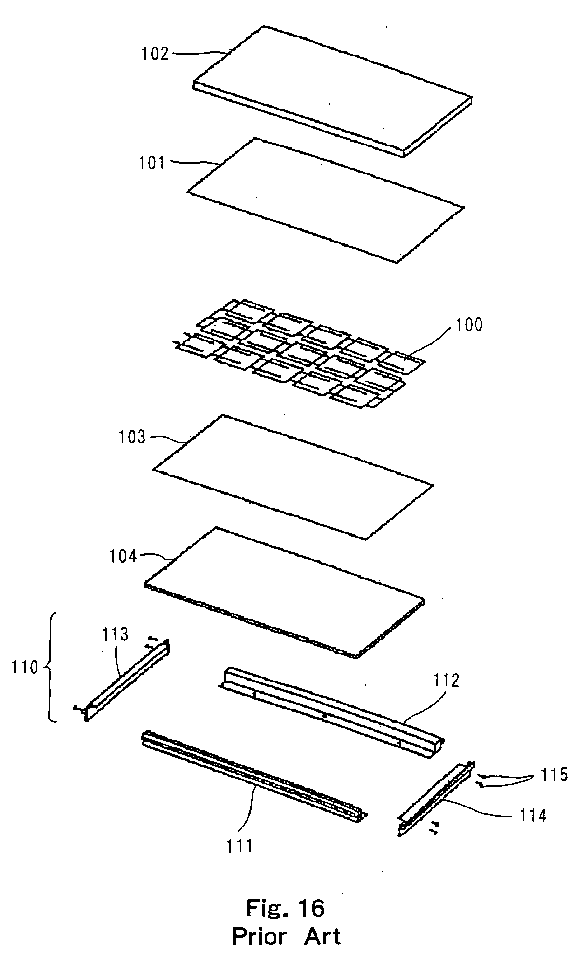

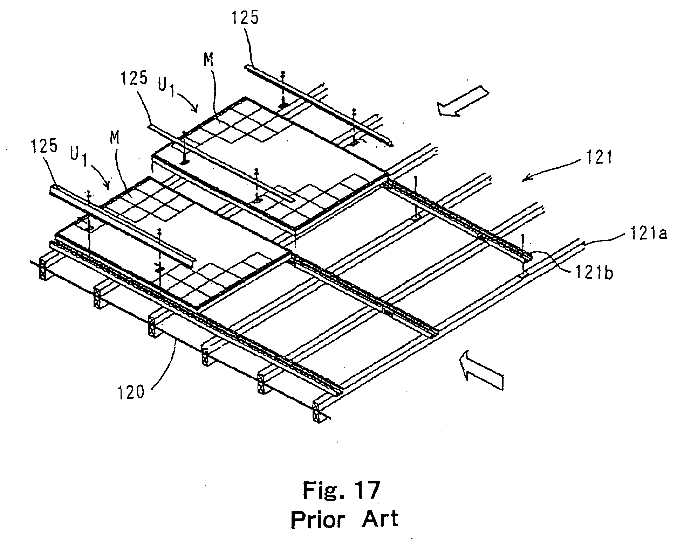

Fig. 15 is a schematic perspective view that shows a conventional solar-battery module unit in which a module frame is attached to a solar-battery module. Fig. 16 is an exploded perspective view of the conventional module unit and Fig. 17 is a schematic perspective view that explains a conventional attaching method for attaching the conventional module unit to a roof. A solar-battery module M has a super-slate structure in which a plurality of solar-battery cells 100, placed in a matrix format, are electrically connected in series or in parallel with each other through inter-connectors or the like. A white reinforced glass plate 102 is laminated on the surface side of these solar-battery cells 100 through a filler member 101 that is formed into a thin flat plate by using a transparent resin or the like. Moreover, a back film 104 is laminated on the rear surface side of the solar-battery cells 100 through a filler member 103 that is formed into a thin flat plate by using a transparent resin or the like. In this manner, the solar-battery cells 100 are sandwiched by the white reinforced glass plate 102 and the back film 104 through the filler members 101 and 103 so that a solar-battery module M having a rectangular flat-plate shape as a whole is formed. Moreover, as shown in Fig. 15, a terminal box 105 is placed on the rear surface of one of the two lateral side ends of the solar-battery module M, and a pair of electric cables 106 are connected to this terminal box 105. A frame member 110 is attached to the periphery of this solar-battery module M so that a module unit U₁ is constructed.

The frame member 110 is provided with a front frame portion 111 and a rear frame portion 112 that are attached along the front and rear ends of the solar-battery module M as well as a left frame portion 113 and a right frame portion 114 that are attached along the left and right ends of the solar-battery module M. These frame portions 111, 112, 113 and 114 are respectively fitted to peripheral edge portions of the solar-battery module M with screws 115. Here, buffer members are interpolated between the front-side frame element 111 as well as the rear-side frame element 112 and the solar-battery module M.

In the case when such a module unit U₁ having the solar-battery module M to which the frame member 110 is attached is installed on a roof of a house, as shown in Fig. 17, a roof member 120 made of a metal plate is placed on the upper surface of a sheathing roof board (not shown), and a base frame 121 constituted by a plurality of longitudinal beams 121a and a plurality of lateral beams 121b is placed thereon. Further, the module unit U₁ is installed on the upper portion of this base frame 121, electric cables 9 are attached thereto, and the ridge side and the eaves side of the module unit U₁ are secured to the base frame 121 together with a cover 125 from above by using bolts; thus, the module unit U₁ is secured thereto (see, for example, Japanese Unexamined Patent Publication No. HEI 11(1999)-324259).

However, such a conventional attaching structure of the solar-battery module M to a roof has the following problems:
(1) Since the conventional attaching structure of the solar-battery module M to a roof is insufficient in anti-water-leakage measures and flame resistive measures, it is not possible to directly attach the solar-battery module M to the sheathing roof board of a roof. For this reason, a roof member 120 is attached to the upper surface of the sheathing roof board to ensure the water-proof property and nonflammable property, and a base frame 121 used for securing the module unit U₁ has to be installed on the roof member 120. Consequently, a cover 125 used for securing the module unit U₁ to the base frame 121 and a number of bolts 126 are required, with the result that the attaching structure becomes complex with an increased number of parts, causing longer installation time and high costs.
(2) Upon installation, the worker might damage the roof member 120, and the adjacent frame members 110 of the solar-battery module M have to be mutually connected with earth cables, with the result that the earth wiring operation needs time-consuming tasks and the frame members 110 might be damaged during these operations.
(3) Since the solar-battery module M is attached onto the base frame 112, the surface of the solar-battery module M is raised above the peripheral roofing tiles, causing adverse effects on the external appearance.

### SUMMARY OF THE INVENTION

An object of the present invention is to provide an attaching structural unit used for installing a quadrangular solar-battery module onto a slanted roof, which is composed of a fewer number of parts, a solar-battery module unit, and an attaching or removing method for a solar-battery structural unit, which can simplify and easily carried out.

The present invention provides an attaching structural unit used for a installing a quadrangular solar-battery module onto a slanted roof, comprising a module frame attached to the solar-battery module, the module frame comprising a pair of first and second elongated frame elements opposed to each other and another pair of third and fourth elongated frame elements opposed to each other, wherein each of the third and fourth frame elements respectively includes a water-leakage preventive edges protruding outward and extending longitudinally from each of the frame elements.

In another aspect, the present invention provides a solar-battery structural unit which is provided with a quadrangular solar-battery module and a module frame in the attaching structural unit to be attached to the solar-battery module, a securing member for securing the module frame to a beam of a roof.

In accordance with the present invention, the solar-battery structural unit can be installed on a roof together with roof-forming members as a simple structural unit, and it is possible to prevent rain water leakage from a gap between the structural units and the roof-forming member in the lateral direction by a water-leakage preventive edge of the module frame.

These and other objects of the present application will become more readily apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a plan view that shows a solar-battery module unit in accordance with an embodiment of the present invention.
Fig. 2 is a cross-sectional side view that shows the module unit of the above embodiment.
Fig. 3 is a cross-sectional side view that shows a state in which the module units of the embodiment are placed on a roof in front and rear two stages.
Fig. 4 is a cross-sectional front view that shows a state in which the module units in accordance with the embodiment are placed on a roof in lateral direction.
Fig. 5 is a cross-sectional view that shows a front-side frame element of a module frame as an embodiment of the present invention.
Fig. 6 is a cross-sectional view that shows a rear-side frame element of a module frame as an embodiment of the present invention.
Fig. 7 is a cross-sectional view that shows a left-side frame element of a module frame as an embodiment of the present invention.
Fig. 8 is a cross-sectional view that shows a right-side frame element of a module frame as an embodiment of the present invention.
Fig. 9 is a cross-sectional view that shows a decorative cover of a module frame as an embodiment of the present invention.
Fig. 10 is a cross-sectional view that shows a front securing tool of a securing part as an embodiment of the present invention.
Fig. 11 is a cross-sectional view that shows a rear securing tool of a securing part as an embodiment of the present invention.
Fig. 12 is a cross-sectional view in which module units according to present invention are placed on a roof together with roofing tiles, and an essential portion of an attaching structure of the module units in the front row on the eaves side of Fig. 3 is shown.
Fig. 13 is a cross-sectional view in which module units according to present invention are placed on a roof together with roofing tiles, and an essential portion of an attaching structure of the module units in the front row and the rear row of Fig. 3 is shown.
Fig. 14 is a cross-sectional view in which module units according to present invention are placed on a roof together with roofing tiles, and an essential portion of an attaching structure of the module units in the rear row on the ridge side of Fig. 3 is shown.
Fig. 15 is a schematic perspective view that shows a conventional module unit with a module frame being attached to a solar-battery module.
Fig. 16 is an exploded perspective view that shows a conventional module unit.
Fig. 17 is a schematic perspective view that explains a conventional attaching method used for attaching a conventional module unit onto a roof.

### DESCRIPTION OF THE PREFERRED EMBODIMENTS

In an attaching structural unit used for installing a quadrangular solar-battery module onto a roof of the present invention, comprising a module frame attached to the solar-battery module, the module frame comprising a pair of first and second elongated frame elements opposed to each other and another pair of third and fourth elongated frame elements opposed to each other, wherein each of the third and fourth frame elements respectively includes a water-leakage preventive edges protruding outward and extending longitudinally from each of the frame elements.

In an attaching structural unit of the present invention, wherein the first frame element is a front-side frame element placed in the direction of an eaves side of the roof, the second frame element is a rear-side frame element placed in the direction of a ridge side of the roof, the third frame element is a left-side frame element placed in the direction of a left side with respect to the roof, and the fourth frame element is a right-side frame element placed in the direction of a right side with respect to the roof.

In the state that the module frame is attached with the solar-battery module to form a module unit and plurality of the module units are placed on the roof adjacent to one another or adjacent to roof-forming members, the rear-side frame element in one module unit is placed under the front-side frame element of another module unit or under a roof-forming member adjacent to said one module unit in an overlapped manner, the water-leakage preventive edge in the left-side frame element in one module unit is under or on the water-leakage preventive edge on the right-side frame element of another module unit or the right-side end in a roof-forming member adjacent to said one module unit in an overlapped manner, and the water-leakage preventive edge in the right-side frame element one module unit is on or under the water-leakage preventive edge in the left-side frame element of another module unit or the left-side end in a roof-forming member adjacent to said one module unit in an overlapped manner.

In other words, in the case where a plurality of the module units are placed on a roof or the module units are placed thereon together with the roof-forming members with respect to a module frame attached to each of the solar-battery modules, a water-leakage preventive edge (underlaid receiving edge or overlaid edge) is formed in the left-side frame element thereof, and a water-leakage preventive edge (overlaid edge or underlaid receiving edge) is formed in the right-side frame element. With this arrangement, in the lateral direction of the solar-battery modules placed on the roof in the front-to-rear direction as well as in the lateral direction, it is possible to prevent leakage of rain water from a gap between the adjacent module units or a gap between the module unit and the roof-forming member. Of course, in the front to rear direction (flowing direction of the roof), the eaves side of the roof-forming member or the module unit is superposed on the ridge side of another module unit or roof-forming member on the preceding row thereof so that it becomes possible to prevent leakage of rain water.

In this case, in accordance with the kinds and shapes of the roof-forming member, with respect to the module frame of the module unit to be placed at a position adjacent to the roof-forming member on the lateral direction, selection is made as to which should be placed on the left-side frame element or the right-side frame element, the overlaid edge or the underlaid receiving edge, or the same overlapped edge may be placed on the left-side frame element and the right-side frame element. For example, in the case where roof-forming members (for example, flat-plate tiles or deformed tiles), each having overlaid/underlaid portions on the left and right end portions, are used, an underlaid receiving edge is formed on the left-side frame element or right-side frame element of a module unit adjacent to the overlaid portion of the tile, and an overlaid edge is formed on the left-side frame element or right-side frame element of a module unit adjacent to the underlaid portion of the tile. Moreover, in the case where roof-forming members, such as roofing tiles and slates, each of which does not have overlaid/underlaid portions on the left and right end portions, are used, an underlaid receiving edge is formed on the left-side frame element and right-side frame element of the module frame adjacent to the roof-forming member. Moreover, in the case where the module units are located laterally adjacent to each other, one of the adjacent left-side frame element and right-side frame element is allowed to have the overlaid edge, with the other being set to the underlaid receiving edge.

With this arrangement, the module unit is directly attached to a beam (so-called tiling lath) in the lateral direction of the sheathing roof board that forms a roof surface, without the necessity of placing a metal roof member (see Fig. 17) for use in water-leakage prevention, which has been conventionally required. Therefore, the present invention makes it possible to eliminate the necessity of members, such as a metal roof member for use in water-leakage prevention and a base frame used for securing the solar-battery module to the roof member; thus, it becomes possible to greatly reduce the number of parts and also to simplify the attaching structure. Consequently, it becomes possible to carry out the installation efficiently in a short time, and also to greatly reduce installation costs.

In the present invention, based upon the state of a roof viewed from the eaves side, the left and right directions are defined, and the eaves side is defined as the front side and the ridge side is defined as the rear side.

Moreover, upon installing the module units in a plurality of rows in the front to rear direction, the module units placed closest to the eaves (the front row) need to be secured to a tiling lath on a roof surface on its front-side frame element and rear-side frame element; however, with respect to each of the other module units closer to the ridge side, only the rear-side frame element is secured to the tiling lath, with the front-side frame element being engaged with the rear-side frame element of the module unit on the preceding row, so that a plurality of solar-battery modules are connected to each other in the front to rear direction. Therefore, it becomes possible to reduce the number of securing members, such as wood screws, used for securing the respective module units to the tiling lath, and also to carry out the installation processes efficiently. Moreover, in the case where a module frame made of metal is used, the module frames of the front and rear module units are engaged with each other to form an electrically connected state. By placing one sheet of the module unit on the succeeding row in a manner so as to bridge the preceding two sheets of the module units, it becomes possible to electrically connect the module frames of all the module units located laterally as well as longitudinally. This arrangement makes it possible to eliminate the necessity of earth wiring between the respective module frames; thus, for example, an earth cable needs to be connected to only one end of the module frame located on the last row, thereby making it possible to carry out the earth wiring job in a shorter time.

Moreover, the module unit itself can be installed on the tiling lath of the sheathing roof boards as roof-forming materials so that the surface of the solar-battery module is placed in the virtually same level as the surface of the roof-forming members such as peripheral tiles and slates; thus, it becomes possible to provide an integrated structure between the solar-battery modules and the peripheral roof-forming members, and consequently to prevent adverse effects caused on the external appearance of the roof. Here, the length of the module unit in the lateral direction is preferably made equal to the length in the lateral direction of a plurality of roof-forming members (for example, flat plate tiles) placed laterally in an overlapped manner, with the length of the front-to-rear direction of the module unit being made virtually equal to the length of the roof-forming member in the front-to-rear direction; this arrangement is preferable from the designing view point as well as from the viewpoint of easiness in the roof-forming operation.

In the present invention, the front-side frame element may has a front hook on its lower surface, and the rear-side frame element may has a rear hook on its upper surface which can be engaged with the front hook in another module unit.

With this arrangement, in the case where a module unit on the succeeding row is placed on the ridge side of the module unit on the preceding row on the ridge side, by pushing the module unit on the succeeding row toward the ridge side, the front hook is naturally engaged with the rear hook of the module frame on the preceding row; thus, in this engaged state, the eaves side frame of the module unit on the succeeding row can be superposed on the rear-side frame element of the module unit on the preceding row so that it becomes possible to prevent the eaves side of the module unit from being raised by strong wind to cause a gap.

The present invention may be further provided with a securing member for securing the module frame onto a beam on the roof and the rear-side frame element of the module frame is further provided with a protruding hook that protrudes forward on its lower surface. In this case, the securing member are provided with a plurality of securing metal tools, a front securing tool that can be engaged with the front hook in the front-side frame element, and a rear securing tool that can be engaged with the protruding hook in the rear-side frame element. The above-mentioned front securing tool may be provided with hole sections through which the above-mentioned securing metal tools are inserted, so that the front securing tool is secured to the beam of the roof through the roof-forming member. The above-mentioned rear securing tool may be provided with hole sections through which the above-mentioned securing metal tools are inserted, and is placed on the beam in an engaged state with the above-mentioned protruding hook of the rear-side frame element.

With this arrangement, the module unit can be positively secured on the tiling lath on the roofing tile easily by using securing metal tools such as nails and small screws in the same manner as the roof-forming members such as roofing tiles. In this case, the above-mentioned front securing tool can be fixed onto the tiling lath even from above the roof-forming member by utilizing the insertion holes (so-called nail holes) of the roof-forming member, and serves as a protruding portion by which the front hook of the module unit on the front row is engaged so that it becomes possible to save securing tasks for securing the front-side frame element of the module unit on the front row onto the tiling lath by using the securing metal tools, and also to carry out a disassembling process of the module unit on the front row easily upon exchanging the module units.

In the present invention, the first frame element, second frame element, third frame element and fourth frame element may be divided respectively, and are connected and assembled with small screws.

With this arrangement, the module frame can be easily manufactured for each of the frame elements. Moreover, the module frames can be easily assembled onto the solar-battery module, and even when a module frame is damaged, it is easily disassembled and exchanged for a new frame.

In the present invention, the front hook may be detachably attached to a front side of the front-side frame element by using small screws; thus, this arrangement makes it possible to easily remove these small screws and also to remove the front hook easily so that a desired module unit placed on the roof can be exchanged easily.

In the present invention, the module frame may be further provided with a decorative cover that is detachably attached to the front-side frame element. With this arrangement, it is possible to provide a unified structure between the front-side frame element of the module units placed on the roof and the eaves-side ends of the peripheral roof-forming members, and also to conceal the small screws on the front hook; thus, it becomes possible to prevent adverse effects from occurring on the external appearance.

In the present invention, the module frame may be provided with a reinforcing member which is placed on the back face of the solar-battery module so as to connect the first frame element and the second frame element; thus, it becomes possible to prevent backlash in the module frames attached to the solar-battery module as well as backlash in the solar-battery module attached to the roof. Moreover, it is also possible to prevent the first frame element from being deformed by fallen snow along the roof at the time of deep snow.

In the present invention, the rear securing tool may be formed to have a length shorter than the rear-side frame element. With this arrangement, it is possible to provide good air permeability between the module unit and the sheathing roof board, and also to suppress an abnormal temperature increase in the solar-battery module. Further, this arrangement allows wires of electric cables of the respective solar-battery modules to pass by the side of each rear securing tool, thereby providing easy wiring jobs.

In the present invention, the module frame may be further provided with a foamed resin member that is incorporated in a gap between the module frame and the solar-battery module. This arrangement makes it possible to positively prevent rain water from entering a gap between the solar-battery module and the module frame, and consequently to positively prevent water permeation into the roof. Moreover, this foamed resin member also functions as a buffering member when the module frames are attached to the solar-battery module so that it becomes possible to prevent damages to the solar-battery module.

The following description will discuss the module unit of the present invention.

The module unit of the present invention, comprising a quadrangular solar-battery module and a module frame in the attaching structural unit to be attached to the solar-battery module.

Since the above-mentioned module unit can be packaged and stored in a warehouse of the maker or the working company, and the unit, as it is, is transported to a construction site and used for roof-forming processes immediately, it becomes possible to provide good workability.

With respect to the quadrangular solar-battery module, any shape, such as square, a rectangular shape, parallelogram and trapezoid, may be used, and in general, those having a rectangular shape, which have the greatest quantity of production, are used.

Moreover, the solar-battery module may be provided with a back film with metal foil, such as steel and aluminum, bonded to the rear surface thereof, and this arrangement makes the solar-battery module nonflammable so that a desirable roof member is prepared.

The solar-battery structural unit of the present invention comprises a quadrangular solar-battery module, a module frame to be attached to the solar-battery module to form a module unit, and a securing member used for securing the module unit on a beam on a roof.

In this arrangement, the module frame is provided with a front-side elongated frame element to be placed in the direction of the eaves of a slanted roof, a rear-side elongated frame element to be placed in the direction of the ridge of the roof, a left-side frame element to be placed in the direction of the left side with respect to the slope of the roof which has a water-leakage preventive edge protruding outward and extending longitudinally from the frame element, and a right-side frame element that to be placed in the direction of the right side with respect to the slope of the roof which has a water-leakage preventive edge protruding outward and extending longitudinally from the frame element.

In this arrangement, the above-mentioned front-side frame element is provided with a front hook on its lower surface, and the above-mentioned rear-side frame element is provided with a rear hook on its upper surface and located on the front hook of the front-side frame element of another module frame and engaged therewith in the front-to-rear direction, and a protruding hook protruding forward on the lower surface, and the above-mentioned left-side frame element and right-side frame element are provided with a water-leakage preventive edge protruding outward and extending longitudinally from each of the frame elements. The above-mentioned securing member includes a plurality of securing metal tools, a front securing tool for engaging with the front hook of the module frame in the front-to-rear direction, and a rear securing tool that is engaged with the protruding hook of the module frame in the front-to-rear direction. The above-mentioned front securing tool includes hole sections through which the above-mentioned securing metal tools are inserted, so that the front securing tool is secured to the beam of the roof through the roof-forming member. The above-mentioned rear securing tool having hole sections through which the securing metal tools are inserted is placed on the beam in an engaged state with the above-mentioned protruding hook of the rear-side frame element. Further, in the state that the module frame is attached the solar-battery module to form a module unit and a plurality module units are placed on a roof adjacent to one another or adjacent to roof-forming members, the above-mentioned rear-side frame element in one module unit is placed under the front-side frame element of another module unit or the roof-forming member adjacent to said one module unit in an overlapped manner, the above-mentioned water-leakage preventive edge in the left-side frame element in one module unit is under or on the water-leakage preventive edge in the right-side frame element of another module unit or a right-side end of the roof-forming member in an overlapped manner, and the water-leakage preventive edge in the right-side frame element in one module unit is on or under the water-leakage preventive edge in the left-side frame element of another module unit or a left-side end in the roof-forming member in an overlapped manner.

With this solar-battery structural unit, upon placing a plurality of solar-battery modules on a roof in the plurality rows, by securing the front securing tool to the beam of the roof with securing metal tools such as nails and screws through the roof-forming member, the eaves side of the module unit on the front row can be engaged with the front securing tool to be secured therein; thus, it is only necessary to secure the ridge side of the module unit onto the beam with the securing metal tools by using rear securing tool, and the securing process is carried out efficiently.

The attaching method of the module unit of the present invention comprises the steps of securing the front securing tool to the beam of the roof from above the roof-forming member with the securing metal tools, engaging the rear securing tool with the protruding hook of the rear-side frame element, engaging the front hook of the front-side frame element with the front securing tool, and placing the rear securing tool on the beam, and securing thereon with the securing metal tools.

In accordance with this attaching method, upon placing a plurality of solar-battery modules on a roof in the plurality rows, by securing the front securing tool to the beam of the roof with securing metal tools such as nails and screws through the roof-forming member, the eaves side of the module unit on the front row can be engaged with the front securing tool to be secured therein; thus, it is only necessary to secure the ridge side of the module unit onto the beam with nails and screws by using the rear securing tool, and the securing process is carried out efficiently.

In the attaching method of the present invention, in case where the module units are placed on a roof with a plurality of rows in the front-to-rear direction, the protruding hook of the rear-side frame element in the module unit to be located in the direction of the ridge of the roof is engaged with the rear securing tool, the front hook of the front-side frame element in the same module unit is also engaged with the rear hook of the rear-side frame element in a module unit to be adjacent to the above module unit, and the above rear securing tool is placed on the beam of the roof and secured with the securing metal tools.

The removing method for the module unit attached on the roof by using the above-mentioned attaching method of the present invention comprises the steps of removing the front hook of the front-side frame element in the module unit to be exchanged, pushing the module unit up toward so that at least the protruding hook of the rear-side frame element is separated from the rear securing tool, and raising the front end of the module unit on or roof-forming member adjacent to the above module unit, thereby detaching the module unit to be exchanged from the roof.

In the removing method of the present invention in which the front hook is detachably attached to the front-side frame element, a module unit to be newly used is beforehand detached on its front hook, which is followed by inserting the new module unit into the position of removed module unit, engaging the protruding hook of the new module unit on the rear securing tool, re-attaching the front hook which is beforehand detached to the new module unit, and engaging the front hook with the front securing tool or the rear hook of the adjacent module unit.

With this removing method, after detaching the front hook of a desired module unit to be exchanged, this module is pushed up toward the ridge side so that the protruding hook of the rear-side frame element is separated from the rear securing tool. Further, in the case where the module unit is located on the adjacent succeeding row, the rear hook of a module unit to be exchanged is also separated from the front hook of the module unit on the succeeding row. Therefore, the exchanging process of the module unit is easily carried out, and the detaching operation of a new module can be carried out in the reversed order to the attaching operation; thus, the exchanging process is easily carried out.

Referring to Figures, the following description discusses the present invention in detail. Here, the present invention is not intended to be limited by the embodiments.

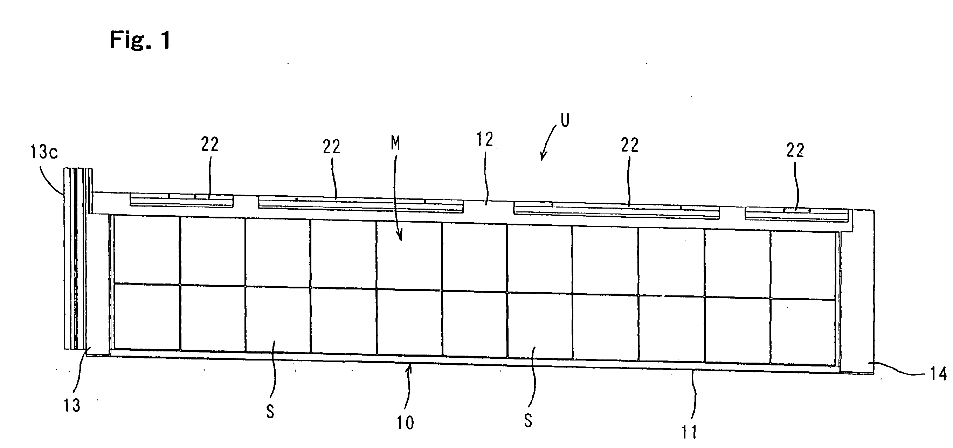

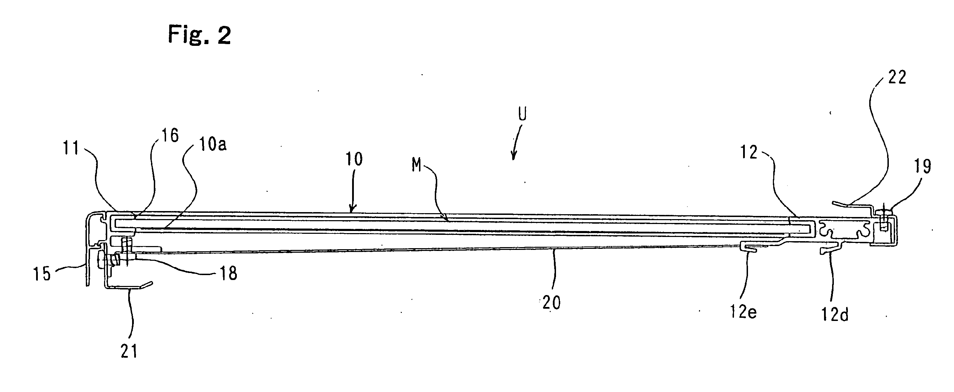

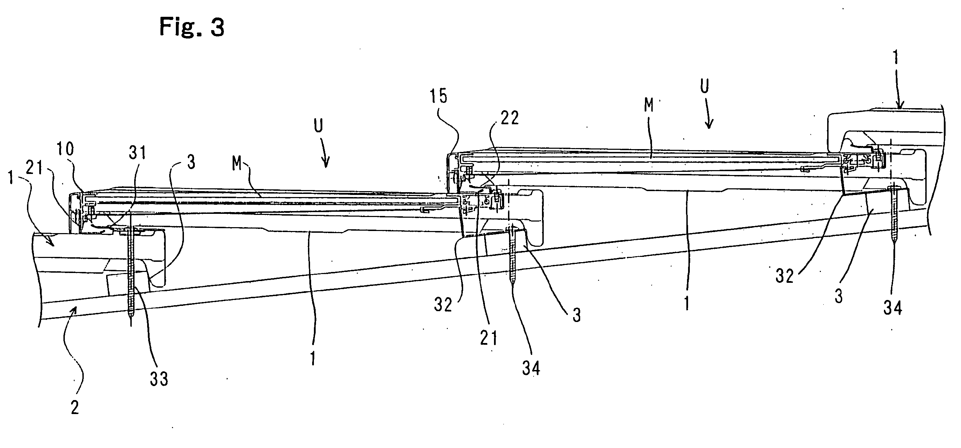

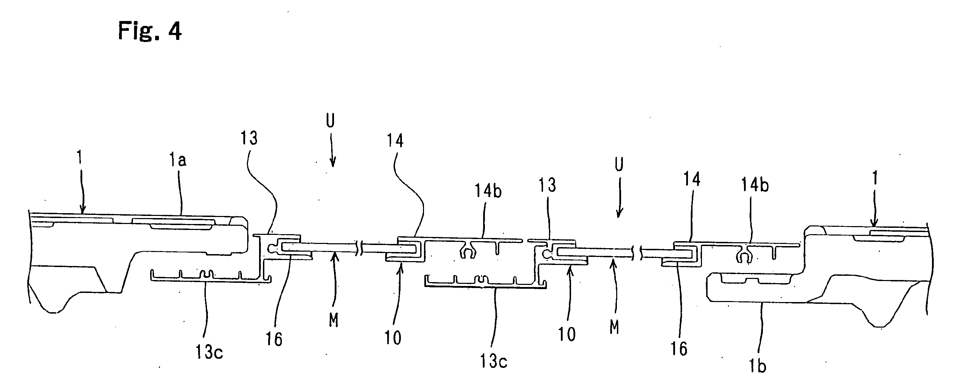

Fig. 1 is a plan view that shows a module unit in accordance with an embodiment of the present invention; Fig. 2 is a side cross-sectional view that shows the module unit of the embodiment; Fig. 3 is a side cross-sectional view that shows a state in which the module units of the embodiment are placed in the front and rear two rows on a roof; and Fig. 4 is a front cross-sectional view that shows the module unit in the embodiment. Here, the present embodiment relates to a case in which flat plate tiles are arranged on a roof, and in general, in most flat plate tiles, an overlaid portion (so-called overlap portion) is formed on the right side; therefore, the present embodiment exemplifies flat plate tiles in which the overlaid portion is formed on the right side; however, the present invention can be applied to flat plate. tiles in which the overlaid portion is formed on the left side, in the same manner.

The present invention relates to the attaching structural unit used for installing the quadrangular (rectangular) solar-battery module M onto the slanted roof, the module unit U, the solar-battery structural unit, the attaching method for the solar-battery structural unit and the removing method for the module unit. As shown in Figs. 1 to 3, the attaching structural unit for the solar-battery modules is provided with a module frame 10 that is attached to the four sides of the solar-battery module M, and a front securing tool 31 and a rear securing tool 32 used for securing the module unit U onto roof beams 3 of a sheathing roof board 2 of the roof. The module unit U is formed by attaching the module frame 10 to the solar-battery module M.

The frame-less solar-battery module M is formed by sealing a plurality of solar-battery cells S (in two rows, each including 11 cells) with a filler material between a surface-side glass plate and a rear-surface-side film, and a back film 10a containing a metal foil is bonded onto the rear surface on the rear-surface-side film. A terminal box is placed on the rear surface of one of the two lateral side ends of the solar-battery module M, and a pair of electric cables are placed on the positive electrode side and the negative electrode side of this terminal box. A module unit U, which is formed by attaching a module frame 10 to the solar-battery module M, is designed so that its length in the lateral direction is virtually the same as the length of a plurality of roofing tiles 1 in the lateral direction, which are placed laterally in an overlapping manner, and its length in the longitudinal direction is designed to be virtually equal to the length of the roofing tile 1 in the longitudinal direction.

The module frame 10 is mainly constituted by a pair of first and second frame elements that face each other, a pair of third and fourth frame elements that face each other and small screws that connect the respective frame portions to each other. More specifically, on the assumption that the solar-battery module M is placed on a roof, the module frame 10 is constituted by a front-side frame element (first frame element) 11 that is attached to the front-side end of the solar-battery module M, a rear-side frame element (second frame element) 12 that is attached to the rear-side end of the solar-battery module M, a left-side frame element (third frame element) 13 that is attached to the left-side end of the module M, a right-side frame element (fourth frame element) 14 that is attached to the right-side end of the module M and a plurality of stainless screws that connect the respective four frame elements 11, 12, 13 and 14 to each other. Each of these frame elements 11, 12, 13 and 14 is formed into a desired cross-sectional shape by an extrusion machining process using, for example, aluminum and aluminum alloy.

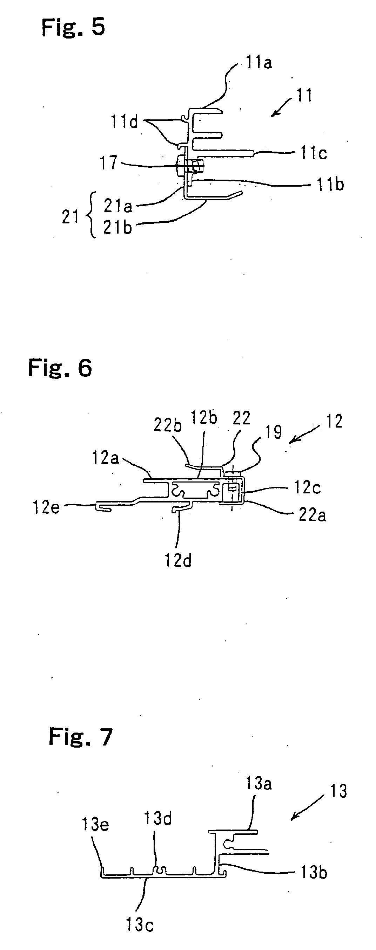

The following description discusses the shape and structure of each of the frame elements of the module frame 10. As shown in Figs. 2 and 5, the front-side frame element 11 is constituted by a holding portion 11a having a U-shaped in its cross section, which is formed so as to hold the front-side end of the solar-battery module M in an inserted state through a seal member 16 made from a foamed resin {for example foaming EPDM (ethylene-propylene-diene-methylene) resin}, a cernuous portion 11 b, which is formed to be connected to the holding portion 11a in a manner so as to protrude downward, and has screw holes with which screws 17 are engaged at predetermined positions, a rear protruding portion 11c that is formed on the rear surface of the cernuous portion 1 1b so as to protrude therefrom, and has screw holes through which screws 18 are engaged at predetermined positions, and an upper-and-lower pair of locking parts 11d that are placed on the front faces of the holding portion 11a and the cernuous portion 11b.

Further, a front hook 21 having an L-shaped in its cross-section is attached to the front-side frame element 11. This front hook 21 is formed, for example, by bending a plate member made of stainless, and has screw holes, formed in its front plate portion 21 a, through which screws 17 are inserted in its superposed state on the front face of the cernuous portion 11 b of the front-side frame element 11, and an engaging plate portion 21b is formed on the front plate portion 21a in a manner so as to protrude backward from its lower end. Here, the rear end of the engaging plate portion 21 b is slightly bent upward.

As shown in Fig. 2 and Fig. 6, the rear-side frame element 12 is provided with a holding portion 12a having a virtually U-shaped in its cross-section, which is formed so as to hold the rear-side end of the solar-battery module M in an inserted state through a seal member 16, a hollow portion 12b which is formed on the rear face of the holding portion 12a so as to be connected thereto, and has a screw-use engaging concave section, formed therein, that is used for connecting the left-side frame element 13 and the right-side frame element 14, an attaching side portion 12c having an L-shaped in its cross-section, which is formed so as to protrude from the upper wall of the hollow portion 12b toward the ridge side, and has a screw hole through which a screw 19 is engaged at a predetermined position, a protruding hook 12d protruding forward (eaves side), which is formed on the lower face of the hollow portion 12b, and a hook portion 12e that extends forward from the lower wall of the holding portion 12a with its tip being folded.

Moreover, a rear hook 22 is further attached to the rear-side frame element 12. This rear hook 22 is provided with an attaching portion 22a having a U-shaped in its cross-section and an engaging plate portion 22b having an L-shaped. The attaching portion 22a is formed by, for example, bending a stainless plate member, is fitted to the above-mentioned attaching side portion 12c, and which has a screw hole through which a screw 19 is inserted, in its upper wall. The engaging plate portion 22b, which protrudes forward from the front end of the upper wall of the attaching portion 22a, and the front end of the engaging plate portion 22b is slightly bent upward. The rear hook 22 is divided into a plurality of portions (see Fig. 1). In the case of the present embodiment, two rear hooks 22 are attached to the rear-side frame element 12 in its center side with a predetermined gap placed in between, and two rear hooks 22 having a length that is virtually a half length of the above-mentioned two rear hooks 22 are attached onto the two sides thereof with a predetermined gap thereto.

As shown in Fig. 4 and Fig. 7, the left-side frame element 13 is provided with a holding portion 13a having a virtually U-shaped in its cross-section, which is formed so as to hold the left-side end of the solar-battery module M in an inserted state through the seal member 16, a cernuous portion 13b that protrudes downward perpendicularly from the side wall of the holding portion 13a, and an underlaid receiving edge 13c for use in water-leakage prevention, which protrudes leftward from the lower end of the cernuous portion 13b, and a plurality of water-draining protruding portions 13d that extend in the front-to-rear direction and a bent end portion 13e that is bent upward are placed on the upper face of the underlaid receiving edge 13c.

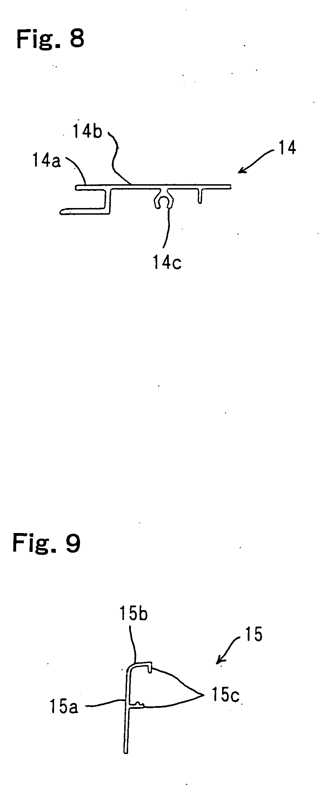

As shown in Fig. 4 and Fig. 8, the right-side frame element 14 is provided with a holding portion 14a having a virtually U-shaped in its cross-section, which is formed so as to hold the right-side end of the solar-battery module M in an inserted state through the seal member 16, and an overlaid edge 14b which protrudes rightward from the upper wall of the holding portion 14a, and a plurality of water-draining protruding portions 14c that extend in the front-to-rear direction are placed on the lower face of the overlaid edge 14b.

As shown in Fig. 2 and Fig. 9, the module frame 10 is further provided with a decorative cover 15 that is detachably attached to the front-side frame element 11 to cover the front end face thereof, and a reinforcing member 20 that is placed on the rear face side of the solar-battery module M so as to connect the front-side frame element 11 1 and the rear-side frame element 12 to each other.

The decorative cover 15 is provided with a front wall 15a, an upper wall 15b formed by bending the top end of this front wall 15a backward, and a pair of upper and lower locking parts 15c that are placed on the rear end of the upper wall 15b and the rear face of the front wall 15a, and engaged with the aforementioned pair of upper and lower locking parts 11d of the front-side frame element 11.

The reinforcing member 20, which is made of, for example, a stainless plate member, has a screw hole through which a screw 18 to be attached to the rear protruding portion 11c of the front-side frame element 11 is inserted, in its front end, and an engaging hole with which the hook portion 12e of the rear-side frame element 12 is engaged, in its rear end. Here, with respect to the reinforcing member 20, one or a plurality of them may be used, and in the case of a single member, it is placed at a middle position in the lateral length direction of the module frame 10, and in the case of a plurality of members, these are placed at respective positions that divide the lateral length of the module frame 10 with virtually equal pitches, and in accordance with this arrangement, the positions and number of the screw holes of the front-side frame element 11 and the hook portions 12e on the rear-side frame element 12 are determined.

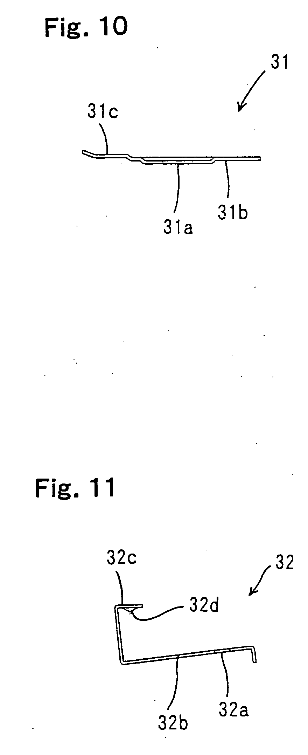

As shown in Fig. 3 and Fig. 10, the front securing tool 31 of the securing member, which is made of, for example, a stainless plate member. The front securing tool 31 is provided with a securing plate portion 3 1 b and an engaging portion 31c. The securing plate portion 31b is placed at a position corresponding to a nail hole on the ridge side end of the roofing tile 1, which having a hole sections 31a through which the securing metal tool 33 (wood screw, in this case) is inserted. The engaging portion 31c that is formed on the front end of the securing plate portion 31 b. The front end of this engaging portion 31c is slightly bent upward. The front securing tool 31 is formed to have a length that is virtually equal to the front-side frame element 11 of the module frame 10.

At the same time, as shown in Fig. 3 and Fig. 11, the rear securing tool 32 of the securing member, which is made of, for example, a stainless plate member. The rear securing member 32 is provided with a securing plate portion 32b and an engaging portion 32c. The securing plate portion 32b is provided with a hole section 32a through which the securing metal tool 34 (wood screw, in this case) is inserted, and that is placed on a tiling lath 3 extending in the lateral direction of the sheathing roof board 2, and that is secured on the tiling lath 3 with the securing metal tool 34 being inserted through the hole section 32a. The engaging portion 32c that is formed so as to be bent upward as well as backward from the front end of a securing plate portion 32b. On the rear surface of the end portion that is bent backward of the engaging side portion 32c, a triangular convex portion 32d is formed. Moreover, the rear end of the securing plate unit 32b is bent downward so as to be engaged by the corner portions of the tiling lath 3 in the lateral direction. The rear securing tool 32 is formed to have a length shorter than the. rear-side frame element 12 of the module frame 10.

Next, referring to Fig. 3 and Fig. 4, the following description discusses one example of an installation sequence in which a predetermined number of solar-battery modules M are placed on a roof in upper and lower two rows together with roofing tiles 1.

First, as shown in Fig. 1 and Fig. 2, the module frame 10 is attached to the four sides of the solar-battery module M. At this time, the front-side frame element 11 is first attached to the eaves-side end of the solar-battery module M with screws, not shown, and the left-side frame element 13 and the right-side frame element 14 are next attached to the right and left ends of the module M with screws respectively. Then, the rear-side frame element 12 is attached to the ridge-side end of the module M with screws. In this manner, a required number of module units U are assembled. These assembling processes of the units U may be carried out at the installation site, or may be finished prior to the transport of the units to the site.

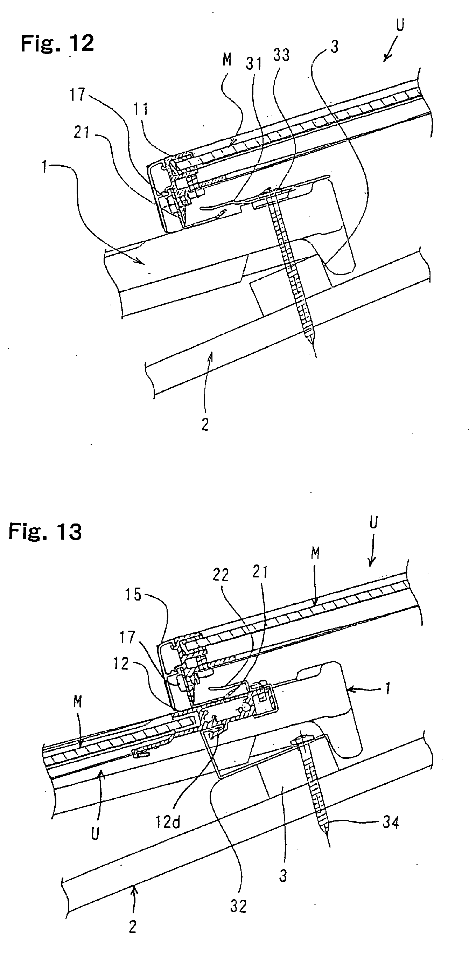

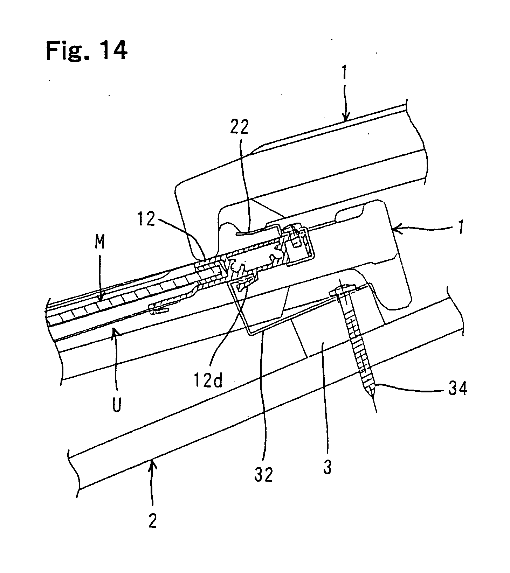

The installation method of the module unit U onto the roof is described below, and referring to Fig. 3 and Fig. 4 as well as Figs. 12 to 14, the explanation will be given. Here, Fig. 12 is a cross-sectional view that shows an essential portion of the attaching structure on the eaves side of the module unit in the front row; Fig. 13 is a cross-sectional view that shows an essential portion of the attaching structure on the ridge side of the module unit in the front row and the eaves side of the module unit in the rear row; and Fig. 14 is a cross-sectional view that shows an essential portion of the attaching structure on the ridge side of the module unit in the rear row.

First, a roofing tile 1 is placed in the first row on the eaves side of the sheathing roof board 2 from the right side. Next, by utilizing the nail hole of the roofing tile 1 in the first row on the eaves side, the front securing tool 31, which serves as a starter for the installation of the module units U, is attached with the securing metal tool (wood screw) 33. Successively, a roofing tile 1 in the second row on the eaves side is attached up to a position just before the attaching position of the module unit.

Then, the first module unit U is secured onto the left side of the roofing tile 1 by using the rear securing tool 32. In this case, in a state where the rear securing tool 32 is engaged with the protruding hook 12d of the rear-side frame element 12 of the module frame 10 with the rear end of the module unit U being raised, the front hook 21 of the front-side frame element 11 is engaged with the front securing tool 31 1 so that the rear securing tool 32 is placed on the tiling lath 3 in the lateral direction and secured thereon with the securing metal tool 34. The first module unit U, thus secured, has its overlaid edge 14b of the right-side frame element 14 superposed on the underlaid portion 1b of the roofing tile 1 so that water leakage (water permeation) is prevented. In the same attaching sequence as the first module unit U, the second module unit U and thereafter are successively secured to the tiling lath 3 in the lateral direction. During these operations, the electric cable on the positive pole side or the negative pole side of the solar-battery module M on the right side is allowed to pass under the solar-battery module M adjacent thereto on the left side, and connected to the positive pole side or the negative pole side of the solar-battery module M on the left side.

Between these module units U, the overlaid edge 14b of the left module unit U is superposed on the underlaid receiving edge 13c of the right module unit U so that rain water leakage is prevented. Successively, a roofing tile 1 is placed next to the left side of the module unit U on the left end. An overlaid portion 1a of the roofing tile 1 is superposed on the underlaid receiving edge 13c of the adjacent module unit U on the right side so that rain water leakage is prevented. In this manner, the installation processes of the roofing tile 1 on the second row (second stage) on the eaves side and the solar-battery module M on the first row (first stage) on the eaves side have been completed. Here, the surface of the solar-battery module M is placed in the virtually same level as the lowest portion of the surface (outer surface) of the roofing tile (flat plate tile) 1.

Next, the sequence proceeds to the installation of the roofing tile 1 in the third row on the eaves side and the solar-battery module M in the second row on the eaves side. In this case, with respect to the module unit U in the preceding row that has been placed, the module unit U in the succeeding row is bridged thereon. In other words, it is placed with an offset so that the front-side frame element 11 of the single module unit U in the succeeding row is supported on the respective rear-side frame elements 12 of the preceding two module units U. The attaching method of the module unit U in the succeeding row is virtually the same as the above-mentioned method; however, in this case, the front securing tool 31 is not required. In other words, with the rear securing tool 32 being engaged with the protruding hook 12d of the rear-side frame element 12 of the module frame 10 in the succeeding row (second row on the eaves side), the front hook 21 of the front-side frame element 11 is engaged with the rear hook 22 of the module frame 10 in the preceding row so that the above-mentioned rear securing tool 32 on the succeeding row side is placed on the roof tiling lath 3 in the lateral direction and secured thereon with the securing metal tool (wood screw) 34. In this manner, a plurality of module units U are successively placed next to the roofing tile 1 on the left side, and the roofing tile 1 is placed next to the left-end module unit U on the left side; thus, the roofing tile 1 in the third row on the eaves side and the solar-battery module M in the second row on the eaves side have been placed. During these processes, the respective electric cables of the solar-battery modules M laterally adjacent to each other are series-connected in the same manner as those in the preceding row, and one of the electric cables of the solar-battery module M on the left end that has been placed lastly is directed to the inside of the house through a wiring duct, not shown, prepared in the roof. Moreover, the module frame 10 of the solar-battery module M in the succeeding row and the module frame 10 of the solar-battery module M in the preceding row are electrically connected to each other, with the front hook 21 and the rear hook 22 (or rear-side frame element 12) being made in contact with each other; thus, the module frames 10 of the all the module units U in the longitudinal direction as well as in the lateral direction are electrically connected to each other so that it is only necessary to connect an earth cable to only the rear-side frame element 12 of the module frame 10 on the left end on the succeeding row that has been lastly placed; thus, the earth cable is drawn into the house together with the electric cable to provide earth wiring. Here, one of the electric cables of the solar-battery module M on the right end in the preceding row is allowed to pass by the side of the rear securing tool 32, and connected to one of the cables of the solar-battery module M on the right end in the succeeding row, with one of the electric cables of the solar-battery module M on the left end in the preceding row being allowed to pass by the side of the rear securing tool 32 and drawn into the house through the wiring duct. In the present embodiment, as shown in Fig. 3 and Fig. 14, the rear hook 22 is attached to the rear-side frame element 12 of the module frame 10 of the module unit U in the succeeding row; however, the rear hook 22 may be removed prior to the installation of the module unit U.

In this manner, a plurality of module units U, each constituted by the solar-battery module M in which the module frame 10 is attached, are laterally secured adjacent to the roofing tiles 1 on the roof with the securing members in the front and rear two rows so that a solar-battery array is formed. This solar-battery array is provided with the above-mentioned water-permeation preventive property in the lateral direction, and in the flowing direction on the roof (front-to-rear direction), the module unit U on the eaves side is placed on the module unit U on the ridge side in the same manner as the arrangement of the roofing tiles so that the water-leakage preventive property is prepared. Moreover, with respect to the securing structure in which the solar-battery modules M are attached to the roof surface, on the eaves side of the module unit U in each of the front and rear rows, its front hook 21 is engaged with the front securing tool 31 or the rear hook 22 of the module unit U in the preceding row, with the ridge side of the module unit U in each of the front and rear rows being directly secured onto the tiling lath 3 in the lateral direction with the rear securing tool 32; thus, the solar-battery modules M are directly placed on most of the roof surface together with the roofing tiles. Moreover, the solar-battery modules M (module units U) are directly placed on the sheathing roof board as roof members so that no base frame is required; thus, it is possible to greatly reduce the number of parts, to greatly shorten the installation time by cutting the attaching processes of the base frame, and consequently to reduce the installation costs. Moreover, since no base frame is required, the level of the solar-battery module surface is maintained as low as the peripheral roofing tiles so that an integral structure with the roof members is achieved; thus, no adverse effects are caused on the external appearance. Furthermore, the rear securing tool is made shorter than the rear-side frame element so that good air permeability is prepared; thus, it becomes possible to prevent a temperature increase in the solar-battery module M, and also to make the wiring process of the electric cables easier. Since the rear hook 22 and the front hook 21 of the module frames 10 of the front and rear adjacent solar-battery modules M are engaged with each other, the module frames 10 of the front and rear solar-battery modules M are connected to each other electrically; thus, no earth cable is required between the module frames 10. Moreover, by preparing the film placed on the face opposite to the light-receiving face as a back film 10a containing a metal foil (for example, steel sheet), a flame-proof structure is formed so that the units are allowed to serve as a roof material having a flame-proof property.

Next, the following description discusses a method for removing and exchanging the solar-battery module of the module unit placed on a roof as described above, in the event of any failure or in the case of expired service life.

In the case when a module unit U in the preceding row is exchanged, first, the decorative cover 15 of the module frame 10 of the module unit U to be exchanged is removed, and the front hook 21 is detached from the front-side frame element 11 by removing the screw 17. At this time, since a screw driver or the like can be made in contact with the screw 17 from the front side of the module frame 10, the removing process is easily carried out. Further, the module unit U to be exchanged is pushed toward the ridge side so that the protruding hook 12d of the rear-side frame element 12 is separated from the rear securing tool 32, and the rear hook 22 is also separated from the front hook 21 of the module unit U in the succeeding row. Then, the front end of the module unit U in the succeeding row (ridge side) is raised so that the module unit U to be exchanged is detached from the roof. In this case, the electric cable of the module unit U to be exchanged is removed from the electric cable of the module unit U adjacent thereto on the left side. Next, the rear end of a new module unit U in which the front hook has been preliminarily removed from the module frame is inserted under the module unit U on the ridge side, and the electric cable of the new module unit U is allowed to pass under the module unit U adjacent thereto on the left so that the electric cables from the two modules are connected to each other. Further, the protruding hook of the new module unit U is engaged with the rear securing tool 32, with the rear hook being engaged with the front hook 21 on the ridge side, and the front hook is attached to the front-side frame element of the module frame of the new module unit U, and then engaged with the front securing tool 31, and the decorative cover 15 is attached thereto; thus, the exchanging processes have been completed. Here, in the case when a module unit U in the succeeding row is exchanged, the same processes as described above are carried out.

In this manner, in accordance with the removing and exchanging method of the module unit U of the present invention, the detaching process of the module unit U to be exchanged and the attaching process of the new module unit U can be carried out by simply removing and attaching the screw 17 and the front hook 21; thus, it becomes possible to complete the exchanging processes easily in a short period of time.

### [Another Embodiment]

1. The above-mentioned embodiment has exemplified a case in which, with respect to the roofing tile, a flat plate tile having an overlaid portion on the right side end is used; however, in the case when a flat plate tile having an overlaid portion on the left side end is placed, the module frame may has a structure that is symmetrically reversed to that of the above-mentioned embodiment in the lateral direction.
2. The above-mentioned embodiment has exemplified a case in which a flat plate tile is used as the roofing tile; however, the present invention is also applicable to a case in which a deformed tile is used. In this case, the shapes of the front-side frame element and the decorative cover are made to match the shape thereof. Moreover, the shape and dimension of the module frame are designed so that the surface of the solar-battery module is placed in the same level as the lowest portion of the surface (outer surface) of the deformed tile.
3. The above-mentioned embodiment has exemplified a case in which the solar-battery modules are placed on a roof with front and rear two stages; however, depending on factors such as the area of the roof surface and the amount of power to be obtained, the number of installation stages, the number of units and the layout pattern thereof can be freely changed.
4. With respect to the roof-forming member, in addition to a roofing tile that has longitudinal overlapping portions on its lateral side ends, a tile, a slate and the like having a compressed plate shape without such overlapping portions may be used. In the case when the module units of the present invention are placed on a roof together with such roof-forming members, as shown in Fig. 4, the right water-leakage preventive edge (underlaid receiving edge) is formed into the right-side frame element of the module frame of the module unit to be placed on the right-end side, and this underlaid receiving edge on the right is inserted under the adjacent roof-forming member on the right side so as to prevent rain water leakage.

## Claims

1. An attaching structural unit used for installing a quadrangular solar-battery module onto a slanted roof: comprising
a module frame attached to the solar-battery module;
the module frame comprising a pair of first and second elongated frame elements opposed to each other and another pair of third and fourth elongated frame elements opposed to each other,
wherein each of the third and fourth frame elements respectively includes a water-leakage preventive edges protruding outward and extending longitudinally from each of the frame elements.

2. The attaching structural unit of claim 1, wherein
the first frame element is a front-side frame element placed in the direction of an eaves side of the roof;
the second frame element is a rear-side frame element placed in the direction of a ridge side of the roof;
the third frame element is a left-side frame element placed in the direction of a left side with respect to the slope of the roof; and
a fourth frame element is a right-side frame element placed in the direction of a right side with respect to the slope of the roof, and
in the state that the module frame is attached the solar-battery module to form a module unit and a plurality of the module units are placed on the roof adjacent to one another or adjacent to roof-forming members ;
the rear-side frame element in one module unit is placed under the front-side frame element of another module unit or under a roof-forming member adjacent to said one module unit in an overlapped manner,
the water-leakage preventive edge in the left-side frame element in one module unit is under or on the water-leakage preventive edge in the right-side frame element of another module unit or the right-side end in a roof-forming member adjacent to said one module unit in an overlapped manner, and
the water-leakage preventive edge in the right-side frame element in one module unit is on or under the water-leakage preventive edge in the left-side frame element of another module unit or the left-side end in a roof-forming member adjacent to said one module unit in an overlapped manner.

3. The attaching structural unit of claim 2, wherein the front-side frame element has a front hook on its lower surface, and the rear-side frame element has a rear hook on its upper surface which can be engaged with the front hook in another module unit.

4. The attaching structural unit of claim 3, wherein a securing member for securing the module frame onto a beam on the roof is further provided and the rear-side frame is further provided with a protruding hook that protrudes forward on its lower surface,
the securing member being provided with a plurality of securing metal tools, a front securing tool that can be engaged with the front hook in the front-side frame element, and a rear securing tool that can be engaged with the protruding hook in the rear-side frame element,
the front securing tool being provided with hole sections through which the securing metal tools are inserted, so that the front securing tool is secured to the beam of the roof through the roof-forming member, and
the rear securing tool being provided with hole sections through which the securing metal tools are inserted, and being placed on the beam in an engaged state with the protruding hook of the rear-side frame element.

5. The attaching structural unit of claim 1, wherein the first frame element, second frame element, third frame element and fourth frame element are divided respectively, and are connected and assembled with small screws.

6. The attaching structural unit of claim 3, wherein the front hook is detachably attached to the front-side frame element from its front side by using small screws.

7. The attaching structural unit of claim 2, wherein the module frame is further provided with a decorative cover that is detachably attached to the front-side frame element.

8. The attaching structural unit of claim 1, wherein the module frame is further provided with a reinforcing member which is placed on the back face of the solar-battery module so as to connect the first frame element and the second frame element.

9. The attaching structural unit of claim 4, wherein the rear securing tool is formed to have a length shorter than the rear-side frame element.

10. The attaching structural unit of claim 1, wherein the module frame is further provided with a foamed resin member that is incorporated in a gap between the module frame and the solar-battery module.

11. A module unit, comprising a quadrangular solar-battery module and a module frame in the attaching structural unit of claim 1, to be attached to the solar-battery module.

12. The module unit of claim 11, which is provided with a back film with metal foil bonded to the rear surface of the solar-battery module.

13. A solar-battery structural unit, comprising:
a quadrangular solar-battery module;
a module frame to be attached to the solar-battery module to form a module unit; and
a securing member used for securing the module unit on a beam on a roof, wherein
the module frame is provided with:
a front-side elongated frame element to be placed in the direction of an eaves of a slanted roof;
a rear-side elongated frame element to be placed in the direction of a ridge of the roof;
a left-side elongated frame element to be placed in the direction of a left side with respect to the slope of the roof which has a water-leakage preventive edge protruding outward and extending longitudinally from the frame element ; and
a right-side elongated frame element to be placed in the direction of a right side with respect to the slope of the roof which has a water-leakage preventive edge protruding outward and extending longitudinally from the frame element,
the front-side frame element being provided with a front hook on its lower surface, and
the rear-side frame element being provided with a rear hook placed on its upper surface and located on the front hook of the front-side frame element of another module frame and engaged therewith in the front-to-rear direction, and a protruding hook protruding forward on the lower surface, and
the left-side frame element and right-side frame element being respectively provided with a water-leakage preventive edge protruding outward and extending longitudinally from frame element, and
the securing member including a plurality of securing metal tools, a front securing tool for engaging with the front hook of the module frame in the front-to-rear direction, and a rear securing tool for engaging with the protruding hook of the module frame in the front-to-rear direction, and
the front securing tool including hole sections through which the securing metal tools are inserted, so that the front securing tool is secured to the beam of the roof through the roof-forming member, and
the rear securing tool having hole sections through which the securing metal tools are inserted which is placed on the beam in an engaged state with the protruding hook of the rear-side frame element, and
in the state that the module frame is attached the solar-battery module to form a module unit and a plurality the module units are placed on a roof adjacent to one another or adjacent to roof-forming members;
the rear-side frame element in one module unit being placed under the front-side frame element of another module unit or a roof-forming member adjacent to said one module unit in an overlapped manner,
the water-leakage preventive edge in the left-side frame element in one module unit being under or on the water-leakage preventive edge in the right-side frame element of another module unit or a right-side end in the roof-forming member in an overlapped manner, and
the water-leakage preventive edge in the right-side frame element in one module unit being on or under the water-leakage preventive edge in the left-side frame element of another module unit or a left-side end in the roof-forming member in an overlapped manner.

14. An attaching method for the solar-battery structural unit of claim 13, comprising the steps of:
securing the front securing tool to the beam of the roof from above the roof-forming member with the securing metal tools;
engaging the rear securing tool with the protruding hook of the rear-side frame element,
engaging the front hook of the front-side frame element with the front securing tool, and
placing the rear securing tool on the beam of the roof, and securing thereon with the securing metal tools.

15. The attaching method of claim 14, wherein, in case where the module units are placed on a roof with a plurality of rows in the front-to-rear direction,
the protruding hook of the rear-side frame element in the module unit to be located in the direction of the ridge of the roof is engaged with the rear securing tool, the front hook of the front-side frame element in the same module unit is also engaged with the rear hook of the rear-side frame element in a module unit to be adjacent to the above module unit, and the above rear securing tool is placed on the beam of the roof and secured with the securing metal tools.

16. A removing method for a module unit attached on a roof by using the attaching method of claim 15 which comprises the steps of:
removing the front hook of the front-side frame element in a module unit to be exchanged,
pushing the module unit up toward so that at least the protruding hook of the rear-side frame element is separated from the rear securing tool, and
raising the front end of a module unit or roof-forming member adjacent to the above module unit, thereby detaching the module unit to be exchanged from the roof.

17. The removing method of claim 16 in which the front hook is detachably attached to the front-side frame element, and a module unit to be newly used is beforehand detached on its front hook, which is followed by inserting the new module unit into the position of removed module unit, engaging the protruding hook of the new module unit on the rear securing tool, re-attaching the front hook which is beforehand detached to the new module unit, and engaging the front hook with the front securing tool or the rear hook of the adjacent module unit.
